# EUROPEAN PATENT SPECIFICATION

(11) **EP 1 205 988 B1**
(45) Date of publication and mention of the grant of the patent: **10.12.2003**
(21) Application number: 01128771.1
(22) Date of filing: 01.09.1999
(51) Int. Cl.: H01M 2/30, H01M 10/40

(54) **Lithium secondary cell**
Lithium-Sekundärbatterie
Pile secondaire au lithium

(30) Priority: 02.09.1998 JP 24845498
(43) Date of publication of application: 15.05.2002
(62) Divisional of application: 99117208.1
(73) Proprietor: Sanyo Electric Co., Ltd., Moriguchi-shi, Osaka (JP)
(72) Inventor: Nakanishi, Naoya, Moriguchi-shi, Osaka (JP); Satoh, Kouichi, Moriguchi-shi, Osaka (JP); Fujiwara, Kazuyasu, Moriguchi-shi, Osaka (JP); Nohma, Toshiyuki, Moriguchi-shi, Osaka (JP); Yonezu, Ikuo, Moriguchi-shi, Osaka (JP)
(74) Representative: Glawe, Delfs, Moll & Partner

(56) References cited:
- EP-A- 0 674 351
- EP-A- 0 851 514
- EP-A- 0 910 129
- FR-A- 2 641 418
- US-A- 4 311 522
- US-A- 5 773 164
- DATABASE WPI Section Ch, Week 197806 Derwent Publications Ltd., London, GB; Class A85, AN 1978-11011A XP002122433 & JP 52 154035 A (YUASA BATTERY CO LTD), 21 December 1977 (1977-12-21)
- PATENT ABSTRACTS OF JAPAN vol. 018, no. 641 (E-1639), 6 December 1994 (1994-12-06) & JP 06 251761 A (JAPAN STORAGE BATTERY CO LTD), 9 September 1994 (1994-09-09)
- PATENT ABSTRACTS OF JAPAN vol. 017, no. 409 (C-1091), 30 July 1993 (1993-07-30) & JP 05 078889 A (KOBE STEEL LTD), 30 March 1993 (1993-03-30)

## Description

### FIELD OF THE INVENTION

The present invention relates to lithium secondary cells, i.e., to improvements in lithium secondary cells wherein the negative electrode is made chiefly from metallic lithium, lithium alloy and/or a carbon material or oxide material capable of absorbing and desorbing lithium, and the positive electrode is prepared mainly from a positive electrode material typical of which is a metallic oxide. More particularly the invention relates to improvements in the positive electrode terminal and the negative electrode terminal for delivering current from an electrode unit serving as the electricity generating element to an external circuit.

### BACKGROUND OF THE INVENTION

The negative electrode materials heretofore proposed for use in lithium secondary cells include graphite, coke and like carbon materials, metallic lithium, lithium alloys and tin oxides. Among these, carbon materials are already in use for negative electrodes to provide lithium secondary cells. Graphite is one of the materials which are generally used for negative electrodes because graphite exhibits a discharge potential in close proximity to the potential of metallic lithium to afford lithium secondary cells of high energy density.

For example, JP-A No. 92335/1997 discloses one of lithium secondary cells wherein such materials are used for the negative electrode. The proposed cell has a negative electrode prepared from a carbon material and a negative electrode output terminal made from pure copper. Pure copper remains stable at the negative electrode potential during the charging and discharging of the lithium secondary cell and is therefore used for the negative electrode output terminal. Besides pure copper, titanium, nickel, stainless steel, etc. appear useful as potentially stable materials, whereas pure copper is thought suitable in view of ease of working.

However, pure copper is susceptible to oxidation and liable to form an oxide film at the portion of the cell exposed to the atmosphere, so that when used for the negative electrode terminal, pure copper has the problem of giving increased contact resistance at the connection to an external circuit, causing faulty contact to result in a discharge voltage drop.

On the other hand, pure aluminum is used for the positive electrode terminal of such a lithium secondary cell (see, for example, JP-A No. 92335/1997) since pure aluminum is also stable at the positive electrode potential during the charging and discharging of the cell. Although titanium, stainless steel, etc. appear useful as potentially stable materials besides pure aluminum, pure aluminum is considered to be suitable from the viewpoint of easy of working, conductivity and material cost.

Pure aluminum is nevertheless prone to form an oxide film, so that when used for the positive electrode terminal, this metal has the problem of offering greater contact resistance at the connection to an external circuit, giving rise to faulty contact or causing a discharge voltage drop as in the case of the negative electrode terminal.

Moreover, the positive or negative electrode terminal is not always satisfactory in mechanical strength and is not always suitable to tighten up with sufficiently great torque when a lead is to be attached thereto for connection to an external power source. This entails the problem that the terminal mount portion will not be sealed off effectively.

PATENT ABSTRACTS OF JAPAN vol. 017, no. 409 (C-1091 ), 30 July 1993 (1993-07-30) & JP 05 078889 A (KOBE STEEL LTD) (30 March 1993), discloses an Al alloy sheet for a terminal comprising an Al alloy base plate consisting of 0.6-1.4 wt.% Mg, 0.4-1.2 wt.% Si, 0.6 wt.% or less of Fe, 0.4 wt.% or less of Cu, and balance Al and unavoidable impurities (each impurity is 0.1 wt.% or less); and a Ni primary coating layer having 0.5-2 µm of thickness and solder surface coating layer having 1-5 µm of thickness. Electrical terminal parts made from this alloy have excellent strength, workability, conductivity, and contact resistance.

EP-A-0 851 514 (MATSUSHITA ELECTRIC IND CO LTD) (1998-07-01) discloses nickel-plated copper as terminal material for batteries.

US-A-4 311 522 (BATRA RAVI *et al*) (1982-01-19) discloses copper alloys having high conductivity at room temperature and superior resistance to softening at elevated temperatures comprise oxygen-free copper containing small but effective amounts of selenium and manganese, and in particular about 4 to about 100 parts per million selenium and about 4 to about 100 parts per million manganese.

### SUMMARY OF THE INVENTION

An object of the invention is to use the positive electrode terminal and/or the negative electrode terminal to assure the terminal or terminals of an enhanced mechanical strength in fabricating the cell and thereby improve the reliability of electrical connection of the cell to an external circuit and give an improved sealing effect to the terminal mount portion or portions. The formation of oxide film on the surfaces of the positive and negative electrode terminals is inhibited, enabling the terminals to retain high conductivity to suppress the discharge voltage drop of the cell.

This object is solved by the features of claim 1.

### BRIEF DESCRIPTION OF THE DRAWINGS

FIG. 1 is a perspective view showing the appearance of a cylindrical lithium secondary cell as a first embodiment of the invention;
FIG. 2 is an exploded perspective view of the lithium secondary cell;
FIG. 3 is a fragmentary view in section of the lithium secondary cell;

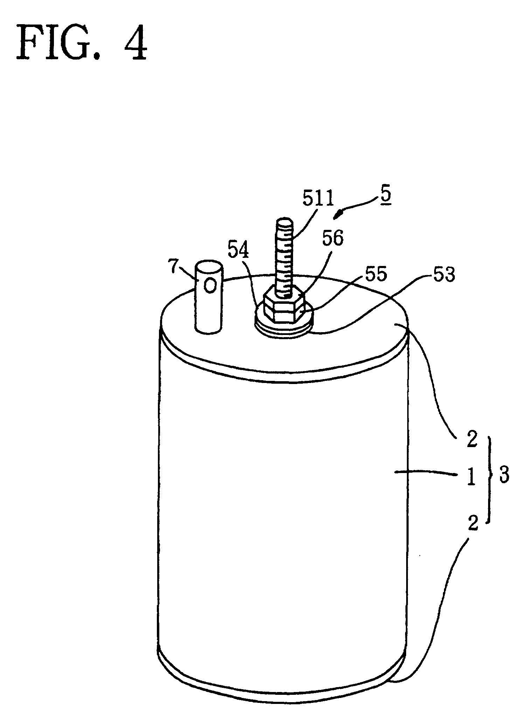

FIG. 4 is a perspective view showing the appearance of another cylindrical lithium secondary cell as a second embodiment of the invention; and
FIG. 5 is a graph showing the relationship between the aluminum content and the incidence of leak.

### DETAILED DESCRIPTION OF EMBODIMENTS

The present invention will be described in greater detail with reference to the following embodiments, whereas the invention is in no way limited to these embodiments and can be practiced as suitably modified within the scope of the essential feature thereof.

### Embodiment 1

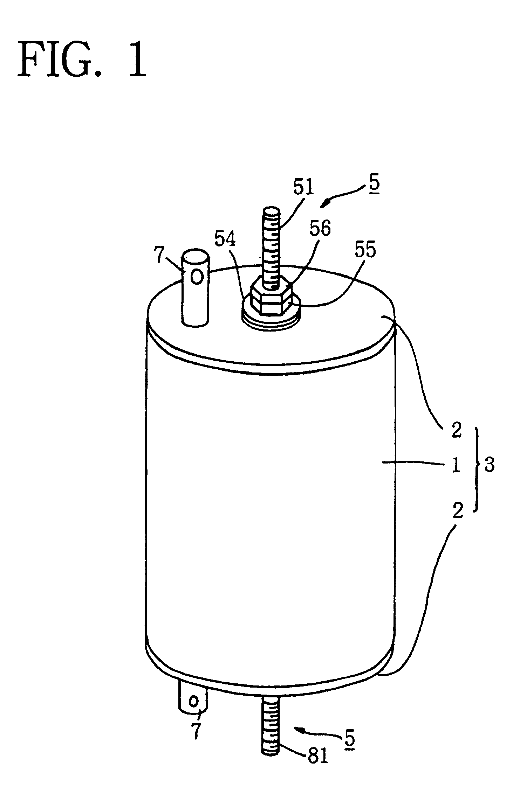

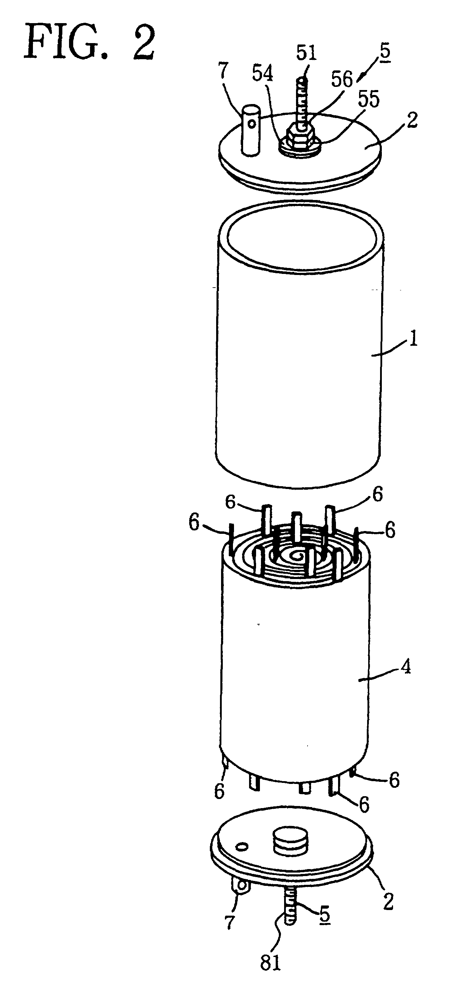

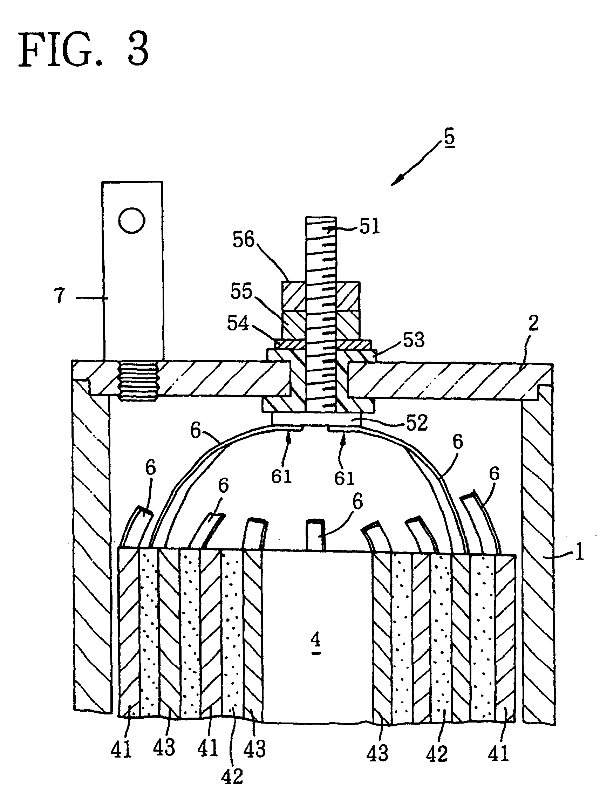

Embodiment 1 will be described which is a cylindrical lithium secondary cell having a relatively large capacity and equipped with a positive electrode terminal and a negative electrode terminal. FIG. 1 is an overall perspective view of the cell of the invention, FIG. 2 is an exploded perspective view of the cell, and FIG. 3 is a view partly in section of the cell.

As shown in FIGS. 1 and 2, the cell of the invention comprises a cylindrical battery can 3 having an aluminum cylinder 1 and lids 2, 2 welded to the respective ends thereof, and a rolled-up electrode unit 4 encased in the can 3. A pair of positive and negative electrode terminal assemblies 5, 5 are attached respectively to the lids 2, 2 which are made of aluminum. The rolled-up electrode unit 4 is connected to the terminal assemblies 5, 5 by a plurality of electrode tabs 6, whereby the electric power generated by the electrode unit 4 can be delivered to an external device from the pair of terminal assemblies 5, 5. Each lid 2 is provided with a gas vent plug 7.

With reference to FIG. 3, the rolled-up electrode unit 4 comprises a positive electrode 41 containing a lithium composite oxide, a separator 42 impregnated with a nonaqueous electrolyte, and a negative electrode 43 containing a carbon material which are lapped over one another and rolled up into a cylinder. A plurality of electrode tabs 6 outwardly extend from each of the positive electrode 41 and the negative electrode 43, and the outer ends 61 of the electrode tabs 6 of the same polarity are joined to one electrode terminal assembly 5. For convenience' sake, only some of these tabs 6 are shown as being joined at their outer ends to the terminal assembly 5 in FIG. 3, while the connection of the ends of the other tabs to the assembly 5 is omitted from the illustration.

The positive electrode terminal assembly 5 has a positive electrode terminal 51 comprising a screw member which extends through a hole in the lid 2 of the battery can 3 and is attached to the lid. The terminal 51 has a flange 52 at its base end. An insulating member 53 of polypropylene is fitted in the hole of the lid 2 to provide electrical insulation and serve as a seal. The positive electrode terminal 51 has a washer 54 fitted therearound from outside the battery can 3, and a first nut 55 and a second nut 56 screwed thereon similarly. The first nut 55 is tightened up to clamp the insulating member 53 between the flange 52 of the terminal 51 and the washer 54 and thereby seal off the hole more effectively. The second nut 56 is utilized for connection to an external circuit.

The electrode tabs 6 extending from the positive electrode of the rolled-up electrode unit 4 are prepared from aluminum foil having a thickness of about 0.1 mm. The outer ends 61 of the tabs 6 are secured to the flange 52 of the terminal 51 by spot welding. Alternatively, the tab ends 61 can be secured by ultrasonic welding.

The negative electrode terminal assembly 5 also has the same construction as described above and comprises a negative electrode terminal 81, which extends through, and is attached to, the lid 2 of the battery can 3. The electrode tabs 6 extending from the negative electrode of the rolled-up electrode unit 4 are prepared from nickel foil having a thickness of about 0.1 mm. The outer ends 61 of the tabs 6 are secured to the flange of the negative electrode terminal 81 by spot welding.

with the lithium secondary cell of the present invention, the positive electrode terminal 51 is made from an aluminum alloy. The aluminum alloy is, for example, an Al-Mg-Si alloy comprising aluminum (Al), magnesium (Mg) and silicon (Si). Typical of such alloys is A6101 prescribed in Japanese Industrial Standards (JIS).

The aluminum alloy, A6101 according to JIS, has a composition comprising 0.35 to 0.8 wt. % of Mg, 0.30 to 0.7 wt. % of Si, 0.50 wt. % of Fe, 0.10 wt. % of Cu, 0.03 wt.% of Mn, 0.10 wt. % of Zn, 0.03 wt. % of Cr, 0.06 wt. % of B and the balance Al.

On the other hand, the negative electrode terminal 81 is made from a material prepared by plating a substrate of copper with nickel. Most suitably, the copper is oxygen-free copper.

The cylindrical lithium secondary cell is fabricated by attaching an electrode terminal assembly 5 to each of lids 2 for forming an battery can 3, welding the outer ends 61 of electrode tabs 6 extending from the positive electrode and the negative electrode of a rolled-up electrode unit 4 to the respective flanges 52 of a positive electrode-terminal 51 and a negative electrode terminal 81 in corresponding relation, with the electrode unit 4 placed in a cylinder 1, and finally securing the lids 2 to the cylinder 1 by welding, with the respective open ends of the cylinder fitted with the lids.

### Embodiment 2

Embodiment 2 will be described wherein an battery can serves also as a positive electrode terminal for delivering electricity to an external circuit.

This embodiment differs from Embodiment 1 described in the following feature. An electrode terminal 511 serving as the negative electrode terminal is attached to one lid 2 for forming an battery can 3 with an insulating member 53 provided between the lid and the terminal. A plurality of electrode tabs extending from the positive electrode of a rolled-up electrode unit 4 are joined directly to the inner surface of the battery can 3, while a plurality of electrode tabs extending from the negative electrode of the unit 4 are connected to the electrode terminal 511. Embodiment 2 is the same as Embodiment 1 with respect to the other components such as a gas vent plug 7.

The electrode terminal 511 is made from a material prepared by plating a substrate of copper with nickel. Most suitably, the copper is oxygen-free copper.

In the case where a cell is to be fabricated according to Embodiment 2 with the positive electrode and the negative electrode replaced by each other, the electrode terminal 511 serving the function of the positive terminal is made from an aluminum alloy. The aluminum alloy is, for example, an Al-Mg-Si alloy comprising aluminum (Al), magnesium (Mg) and silicon (Si). Typical of such alloys is A6101 prescribed in Japanese Industrial Standards (JIS). Instead of aluminum, stainless steel or the like is used as the material for the battery can 3.

### Experiment 1

In this experiment, lithium secondary cells having the construction of Embodiment 1 described were tested for comparison between two cases, i.e., use of pure aluminum for making the positive electrode terminal 51, and use of the aluminum alloy, A6101 according to JIS, for the terminal 51.

Prepared for the experiment were comparative cells each having a positive electrode terminal 51 in the form of a pure aluminum bolt of M8 (diameter, 8 mm) and pure aluminum nuts 55, 56, and cells of the invention each having a positive electrode terminal 51 in the form of an aluminum alloy bolt and aluminum alloy nuts 55, 56. The cells were then checked for sealing effect and changes in appearance after tightening up the first nut 55 with varying torques. The sealing effect was evaluated immediately after the completion of tightening or after subjecting the cell to 100 heat cycles of -20°C - 80°C, by filling the cell with nitrogen gas to a pressure of 5 kgf/cm² and visually checking the cell for a leak of nitrogen gas using an aqueous solution of soap.

Table 1 shows the results.

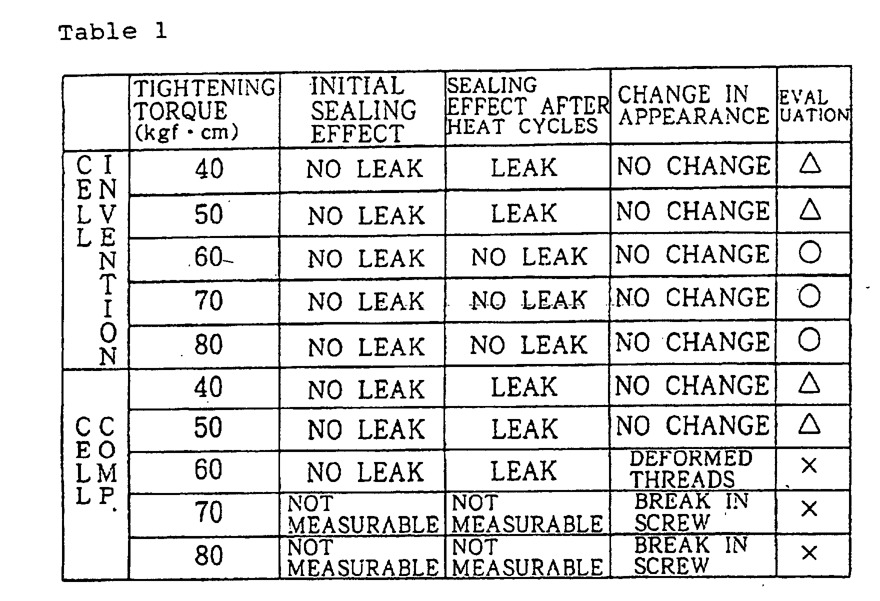

The results indicate that when the tightening torque was not greater than 50 kgf·cm, both the cell of the invention and the comparative cell failed to exhibit a sealing effect after the heat cycles owing to insufficient tightening torque. The failure is irrelevant to the terminal material and attributable to the sealing structure. When the tightening torque was 60 kgf·cm, the cell of the invention was free of deformation and satisfactory in sealing effect, whereas a sealing failure occurred in the comparative cell due to deformed threads leading to insufficient tightening. When the tightening torque was not smaller than 70 kgf·cm, the screw broke in the comparative cell, failing to serve the intended function, whereas the cell of the invention retained a satisfactory sealing effect. These findings reveal that the aluminum alloy A6101 prescribed in JIS is advantageous to use as the material for the positive electrode terminal.

### Experiment 2

In this experiment, lithium secondary cells having the construction of Embodiment 1 described were tested for comparison using pure nickel, pure copper or oxygen-free copper plated with nickel for making the negative electrode terminal 81.

Prepared for the experiment were Comparative Cell 1 having a negative electrode terminal 81 in the form of a pure nickel bolt of M8 and pure nickel nuts 55, 56, Comparative Cell 2 having a negative electrode terminal 81 in the form of a pure copper bolt and pure copper nuts 55, 56, and cells of the invention each having a negative electrode terminal 81 in the form of a bolt made of oxygen-free copper and plated with nickel and nuts 55, 56 made of oxygen-free copper and plated with nickel. The term "oxygen-free copper" refers to copper which has a high purity, contains no oxygen and is prepared by reduction in a reducing gas or melting in a vacuum for use as a material for vacuum tubes, etc.

First, Comparative Cell 1 and one of the cells of the invention were checked for sealing effect and changes in appearance after tightening up the first nut 55 with a torque of 70 kgf·cm. The cells were tested for sealing effect by filling the cell with nitrogen gas to a pressure of 5 kgf/cm² and visually checking the cell for a leak of nitrogen gas using an aqueous solution of soap.

Table 2 shows the results.

**Table 2**

| | MATERIAL OF NEGATIVE ELECTRODE TERMINAL | INCIDENCE OF LEAK | APPEARANCE |
|---|---|---|---|
| INVENTION CELL | OXYGEN - FREE Cu + Ni PLATING | 0/100 | TIGHTEN UP WITH NO FAULTS |
| COMP. CELL 1 | PURE Ni | 32/100 | HARD MATERIAL, SCREW DISTORTION |

The results reveal the superiority of the cell of the invention wherein the bolt providing the negative electrode terminal 81 and the nuts 55, 56 were made of oxygen-free copper and plated with nickel, over Comparative Cell 1 wherein the bolt of pure nickel and the nuts 55, 56 of pure. nickel were used, hence the advantage of the material of the invention for the negative electrode terminal. Incidentally, the nickel plating layer is about 100 µm in thickness.

Next, Comparative Cell 2 and the cell of the invention were checked for the electric conductivity of the negative electrode terminal after tightening up the first nut 55 with a torque of 70 kgf·cm. The lithium secondary cells used for the evaluation of the conductivity were of 50 Wh class and 40 mm in diameter and 190 mm in height. Each cell was discharged at a definite current value for a specified period of time, and the voltage drop was measured from the open-circuit voltage to calculate the cell resistance from the measurement. Stated more specifically, the positive terminal and the negative terminal of an external measuring instrument were connected to the positive electrode terminal and the negative electrode terminal, each as clamped between the two nuts 55, 56, and the voltage drop was measured with the IR drop of the positive and negative electrode terminals involved. The measurement was made twice, i.e., immediately after the fabrication of the cell and after preservation at 60°C for 20 days. The cell was discharged at a current value of 10 A, 30 A, 60 A and 90 A, for 10 seconds at each value, and the resulting voltage drop was measured each time. The cell resistance was calculated form the measurements obtained.

Table 3 shows the results.

**Table 3**

| | NEGATIVE ELECTRODE TERMINAL | CELL RESISTANCE IMMEDIATELY AFTER FABRICATION | CELL RESISTANCE AFTER PRESERVATION AT 60°C FOR 20 DAYS |
|---|---|---|---|
| INVENTION CELL | OXYGEN - FREE Cu+Ni PLATING | 5.23∼5.47m Ω | 5.42∼5.73m Ω |
| COMP. CELL 2 | PURE Ni | 5.30∼5.51m Ω | 6.23∼7.34m Ω |

The results reveal the superiority of the cell of the invention-wherein the bolt providing the negative electrode terminal 81 and the nuts 55, 56 were made of oxygen-free copper and plated with nickel, over Comparative Cell 2 wherein the bolt of pure copper and the nuts 55, 56 of pure copper were used, hence the advantage of the material of the invention for the negative electrode terminal. The reason is that with Comparative Cell 2, an oxide film is formed on the surface of the negative electrode terminal, giving increased contact resistance to the connection to the external circuit.

Further studies were made on the composition of aluminum alloys for forming the positive electrode terminal 51 for use in the cylindrical lithium secondary cell according to Embodiment 1 shown in FIGS. 1 to 3. The negative electrode terminal 81 was prepared from a substrate of copper plated with nickel.

### Invention Cells 10-12

Positive electrode terminals each comprising a bolt of M8, and nuts were prepared from four kinds of aluminum alloys different in the ratio of components and containing Mg, Si, Fe, Cu, Mn, Cr, Zn and B as additive elements as listed in Table 8, and Invention Cells 10 to 12 were fabricated.

The cells were then checked for sealing effect after tightening up the first nut 55 with a torque of 70 kgf·cm. The sealing effect was evaluated after subjecting the cell to 100 heat cycles of -20°C - 80°C, by filling the cell with nitrogen gas to a pressure of 5 kgf/cm² and visually checking the cell for a leak of nitrogen gas using an aqueous solution of soap.

The cells were also checked for electric conductivity by discharging the cell at a definite current value for a specified period of time, measuring the voltage drop from the open-circuit voltage and calculating the cell resistance from the measurement.

### Invention Cells 14-18

Positive electrode terminals each comprising a bolt of M8, and nuts were prepared from seven kinds of aluminum alloys different in the ratio of components and containing Mg, Si, Fe, Cu, Mn, Cr, Zn and B as additive elements as listed in Table 9, and Invention Cells 14 to 18 were fabricated.

### Invention Cells 20-26

Positive electrode terminals each comprising a bolt of M8, and nuts were prepared from seven kinds of aluminum alloys different in the ratio of components and containing Mg, Si, Fe, Cu, Mn, Cr, Zn and B as additive elements as listed in Table 10, and Invention Cells 20 to 26 were fabricated.

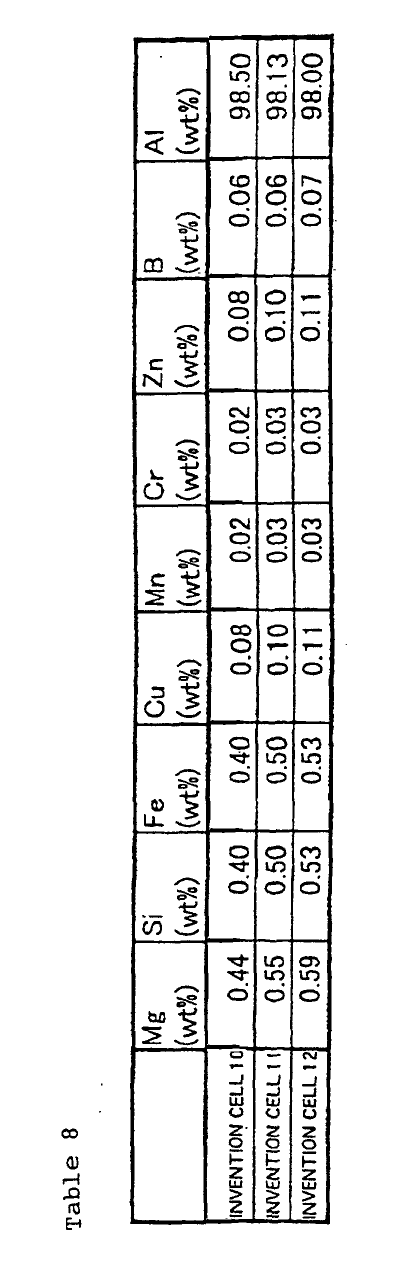

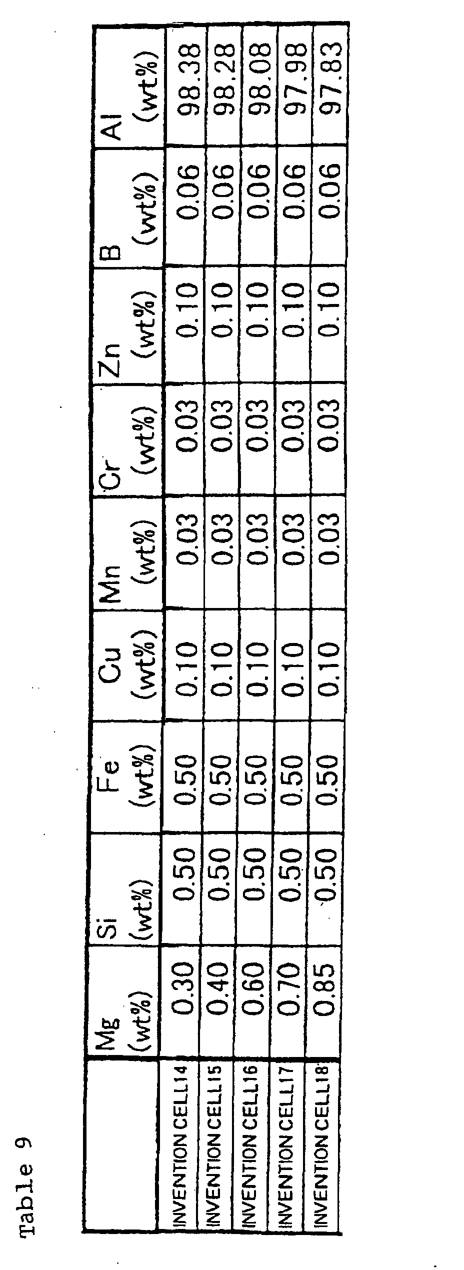

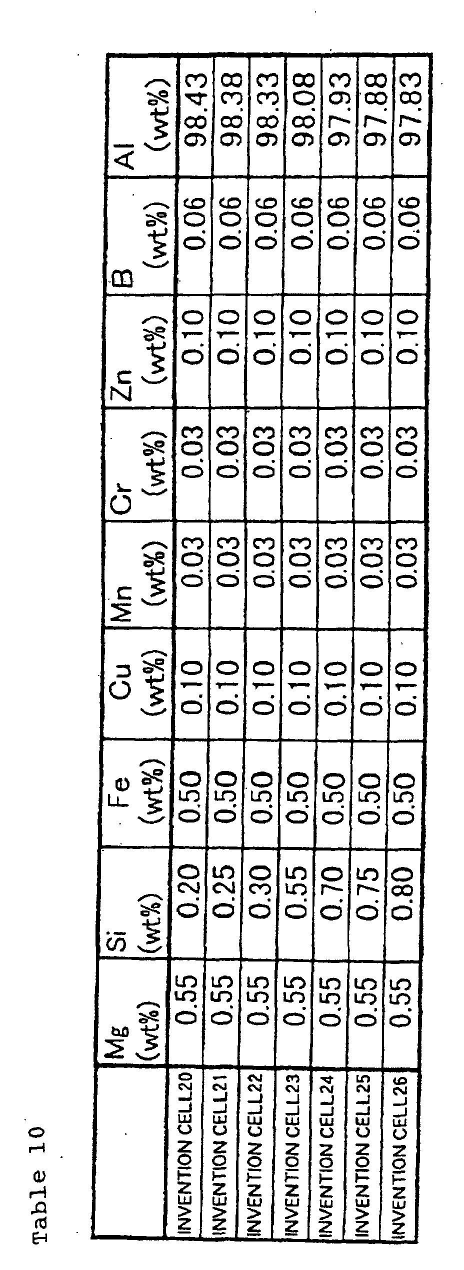

### Comparative Cells 3-10

Positive electrode terminals each comprising a bolt of M8, and nuts were prepared from eight kinds of aluminum alloys different in composition and containing Si, Mg, Fe or Cu as an additive element as listed in Tables 12 to 15, and Comparative Cells 3 to 10 were fabricated.

### Comparative Cells 11, 12

Positive electrode terminals each comprising a bolt of M8, and nuts were prepared from two kinds of aluminum alloys containing Mg, Si, Fe, Cu, Mn, Cr, Zn and B as additive elements as listed in Table 16, and Invention Cells 11 and 12 were fabricated.

**Table 12**

| | Al (wt%) | Si (wt%) |
|---|---|---|
| COMP. CELL 3 | 99.50 | 0.50 |
| COMP. CELL 4 | 99.10 | 0.90 |

**Table 13**

| | Al (wt%) | Mg (wt%) |
|---|---|---|
| COMP. CELL 5 | 99.50 | 0.50 |
| COMP. CELL 6 | 99.10 | 0.90 |

**Table 14**

| | Al (wt%) | Fe (wt%) |
|---|---|---|
| COMP. CELL 7 | 99.50 | 0.50 |
| COMP. CELL 8 | 99.10 | 0.90 |

**Table 15**

| | Al (wt%) | Cu (wt%) |
|---|---|---|
| COMP. CELL 9 | 99.50 | 0.50 |
| COMP. CELL 10 | 99.10 | 0.90 |

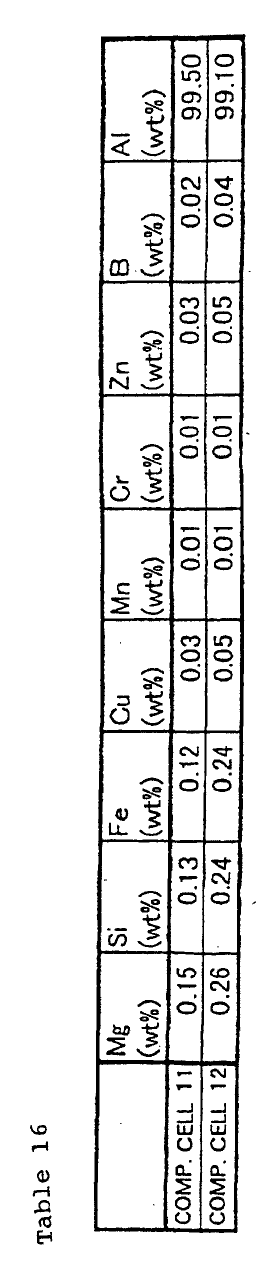

### Evaluation

Tables 21 to 23 show the incidences of leak in the cells and cell resistances.

Table 21 reveals that the use of the aluminum alloy containing Mg, Si, Fe, Cu, Mn, Cr, Zn and B as additive elements in a combined amount of at least 1.0 wt. % results in reduced cell resistance, increased power density and decreased incidence of leak.

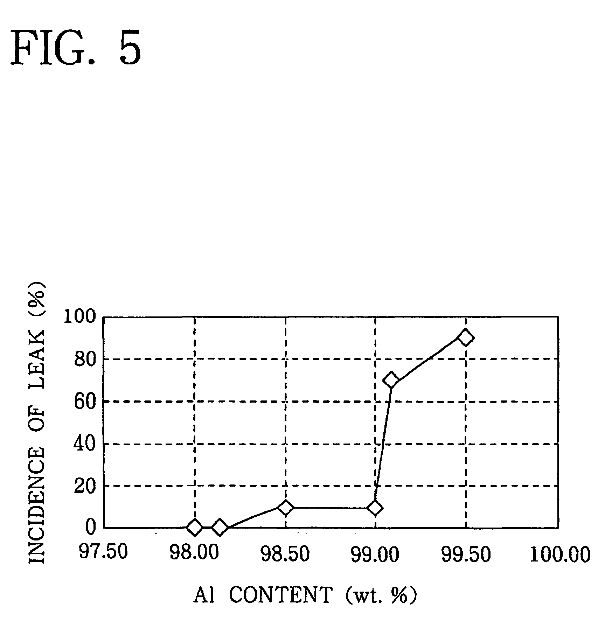

FIG. 5 is a graph showing the relationship between the aluminum content and the incidence of leak established for Comparative Cells 11 and 12 and Invention Cells 10 to 12. The graph reveals that the incidence of leak decreases markedly when the aluminum content is lower than 99 wt. % which is a boundary value. Accordingly the combined content of additive elements other than aluminum which should be at least 1.0 wt. % has a critical significance.

Table 22 further indicates that when the Mg content of aluminum alloys is in the range of at least 0.30 wt. % to not higher than 0.85 wt. %, reduced cell resistance is available to give an increased power density.

This result substantiates the superiority of the Mg content of aluminum alloys which should be in the range of at least 0.30 wt. % to not higher than 0.85 wt. %.

Tables 23 further showsthat reduced cell resistance is available to afford an increased power density when the Si content of aluminum alloys is in the range of at least 0.25 wt. % to not higher than 0.75 wt. %.

This result substantiates the superiority of the Si content of aluminum alloys which should be in the range of at least 0.25 wt. % to not higher than 0.75 wt. %.

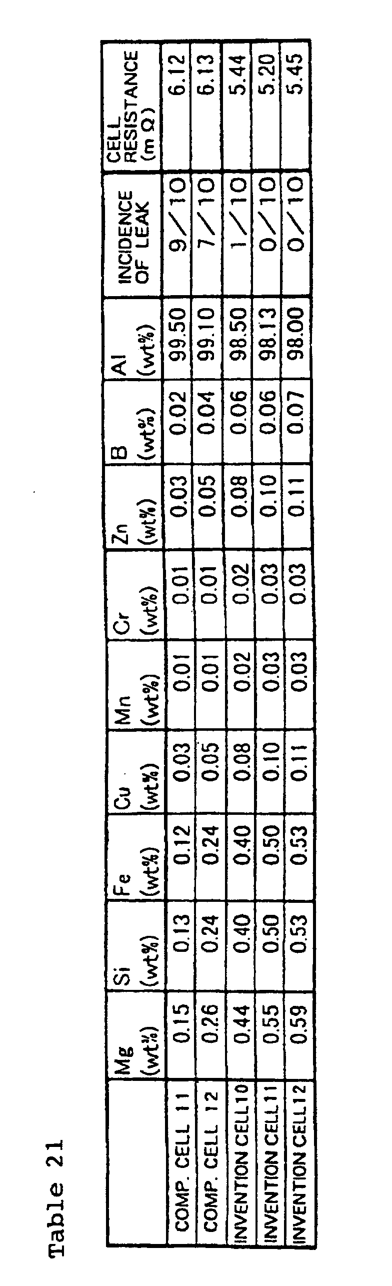

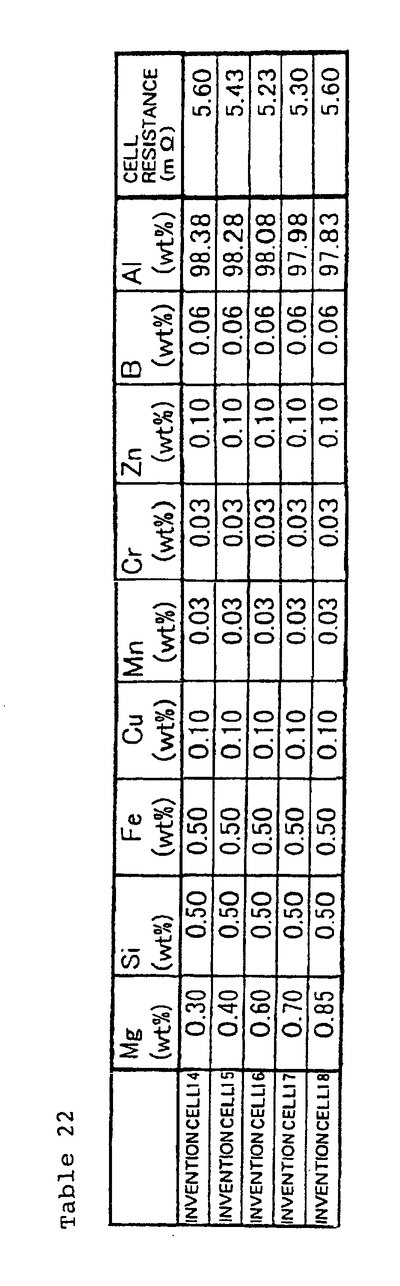

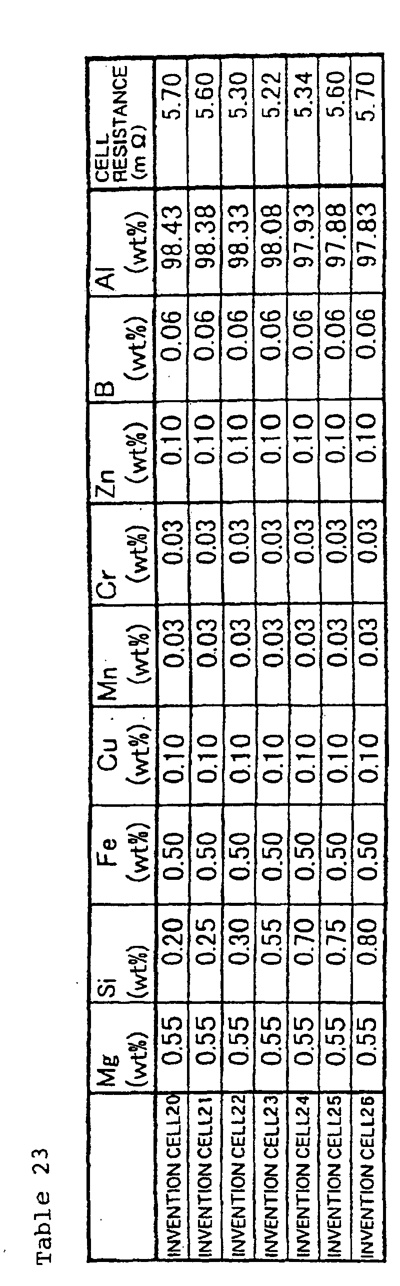

While the embodiments described above are cylindrical lithium secondary cells to which the present invention is applied, the cells of the invention are not limited specifically in shape, but the present invention is applicable to lithium secondary cells of various shapes such as those of square or rectangular cross section.

As described above in detail, the use of the positive electrode terminal and/or the negative electrode terminal of the invention in lithium secondary cells ensures more reliable electrical connection between the cell and an external circuit and gives an improved sealing effect to the portions where the terminals are attached because of the enhanced mechanical strength of the terminals. Further because the formation of oxide film is inhibited over the surfaces of the positive and negative electrode terminals, these terminals are capable of retaining high conductivity to suppress the discharge voltage drop of the cell. Thus the invention is of immense industrial value.

## Claims

1. A lithium secondary cell comprising a battery can (3), an electrode unit (4) serving as an electricity generating element and housed in the battery can (3), and a positive electrode terminal (51) and a negative electrode terminal (81) which are attached as electrically insulated from each other to the battery can (3), the electrode unit (4) having a positive electrode and a negative electrode electrically connected to the positive electrode terminal (51) and the negative electrode terminal (81) respectively, the lithium secondary cell being **characterized in that** each of the electrode terminals (51) (81) extends through a hole in a lid (2) of the battery can (3) and is attached to the lid (2), an insulating member (53) is fitted around the hole of the lid (2) through which the positive electrode terminal (51) extends, each of the electrode terminals (51) (81) has a nut (55) fitted therearound from outside the battery can (3), and the nut (55) is tightened up thereby to serve as a seal between the lid (2) and each of the electrode terminals (51) (81), the positive electrode terminal (51) is formed from an aluminum alloy containing at least 1.0 wt. % of a plurality of different metals as additive elements, wherein the plurality of different metals contain magnesium and silicon as additive elements, and the magnesium content is at least 0.30 wt. % to not greater than 0.85 wt. %, the negative electrode terminal (81) is formed by plating a substrate of copper with nickel.

2. A lithium secondary cell according claim 1, wherein the substrate of the negative electrode terminal (81) is made of oxygen-free copper.

## Patentansprüche

1. Lithium-Sekundärbatterie mit einem Batteriegehäuse (3), einer Elektrodeneinheit (4), die als ein Elektrizität erzeugendes Element dient und in dem Batteriegehäuse (3) aufgenommen ist, und einem positiven Elektrodenanschluss (51) und einem negativen Elektrodenanschluss (81), die elektrisch voneinander isoliert an dem Batteriegehäuse (3) befestigt sind, wobei die Elektrodeneinheit (4) eine positive Elektrode und eine negative Elektrode hat, die an den positiven Elektrodenanschluss (51) bzw. den negativen Elektrodenanschluss (81) angeschlossen sind, wobei die Lithium-Sekundärbatterie
**dadurch gekennzeichnet ist, dass** jeder der Elektrodenanschlüsse (51, 81) durch ein Loch in einem Deckel des Batteriegehäuses (3) ragt und an dem Deckel (2) befestigt ist, wobei um die Bohrung des Deckels (2), durch welche der positive Elektrodenanschluss (51) ragt, ein elektrisch isolierendes Element (53) angepaßt ist, wobei jeder der Elektrodenanschlüsse (51, 81) von der Außenseite des Batteriegehäuses (3) her eine Mutter (55) aufgeschraubt hat, und die Mutter (55) angezogen wird, wodurch sie als eine Dichtung zwischen dem Deckel (2) um jeden der Elektrodenanschlüsse (51, 81) dient, wobei der positive Elektrodenanschluss (51) aus einer Aluminiumlegierung besteht, die wenigstens 1,0 Gew.-% einer Anzahl von unterschiedlichen Metallen als Zusatzelemente enthält, wobei die Anzahl der unterschiedlichen Metalle Magnesium und Silizium als Zusatzelemente aufweist, und der Magnesiumgehalt wenigstens 0,30 Gew.-% und nicht größer als 0,85 Gew.-% ist, wobei der negative Elektrodenanschluss (81) durch Plattieren eines Kupfersubstrats mit Nickel hergestellt ist.

2. Lithium-Sekundärbatterie nach Anspruch 1, wobei das Substrat des negativen Elektrodenanschlusses (81) aus einem sauerstofffreien Kupfer besteht.

## Revendications

1. Pile secondaire au lithium comprenant un boîtier de batterie (3), une unité d'électrode (4) servant d'élément générant de l'électricité et logée dans le boîtier de batterie (3), et une borne d'électrode positive (51) et une borne d'électrode négative (81) qui sont attachées, de manière isolée électriquement l'une de l'autre, au boîtier de batterie (3), l'unité d'électrode (4) comportant une électrode positive et une électrode négative connectées électriquement respectivement à la borne d'électrode positive (51) et à la borne d'électrode négative (81), la pile secondaire au lithium étant **caractérisée en ce que** chacune des bornes d'électrode (51)(81) s'étend dans un trou réalisé dans un couvercle (2) du boîtier de batterie (3) et est attachée au couvercle (2), un élément isolant (53) est monté autour du trou du couvercle (2) par lequel passe la borne d'électrode positive (51), chacune des bornes d'électrode (51)(81) a un écrou (55) monté autour de celle-ci depuis l'extérieur du boîtier de batterie (3), et l'écrou (55) est serré pour servir de ce fait d'élément d'étanchéité entre le couvercle (2) et chacune des bornes d'électrode (51)(81), la borne d'électrode positive (51) est formée à partir d'un alliage d'aluminium contenant au moins 1,0 % en poids d'une pluralité de métaux différents en tant qu'éléments d'alliage, où la pluralité de métaux différents contient du magnésium et du silicium en tant qu'éléments d'alliage, et la teneur en magnésium est supérieure ou égale à 0,30 % en poids et est inférieure ou égale 0,85 % en poids, la borne d'électrode négative (81) est formée par placage de nickel sur un substrat de cuivre.

2. Pile secondaire au lithium selon la revendication 1, dans laquelle le substrat de la borne d'électrode négative (81) est en cuivre exempt d' oxygène.
